(19) Europäisches Patentamt
European Patent Office
Office européen des brevets

(11) EP 2 553 018 B1

(12) EUROPÄISCHE PATENTSCHRIFT

(45) Veröffentlichungstag und Bekanntmachung des Hinweises auf die Patenterteilung:
08.01.2014 Patentblatt 2014/02

(51) Int Cl.:
$C08L\ 33/12^{(2006.01)}$    $C08L\ 25/12^{(2006.01)}$
$C08L\ 51/04^{(2006.01)}$

(21) Anmeldenummer: 11709734.5

(22) Anmeldetag: 23.03.2011

(86) Internationale Anmeldenummer:
PCT/EP2011/054481

(87) Internationale Veröffentlichungsnummer:
WO 2011/117312 (29.09.2011 Gazette 2011/39)

(54) **THERMOPLASTISCHE FORMMASSEN MIT VERBESSERTEN OPTISCHEN EIGENSCHAFTEN**

THERMOPLASTIC MOLDING COMPOSITIONS WITH IMPROVED OPTICAL PROPERTIES

MATIÈRES MOULABLES THERMOPLASTIQUES À PROPRIÉTÉS OPTIQUES AMÉLIORÉES

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 26.03.2010 EP 10157863

(43) Veröffentlichungstag der Anmeldung:
06.02.2013 Patentblatt 2013/06

(73) Patentinhaber: Styrolution GmbH
60325 Frankfurt am Main (DE)

(72) Erfinder:
• MÜLLER, Matthias
64319 Pfungstadt (DE)
• LEBER, Ludger
67125 Dannstadt-Schauernheim (DE)
• DATKO, Achim
69181 Leimen (DE)
• BRAUN, Leonie Felicitas
68163 Mannheim (DE)
• LEMAIRE, Christian
67059 Ludwigshafen (DE)
• CHAROENSIRISOMBOON, Piyada
68165 Mannheim (DE)
• PEPERS, Michel
67071 Ludwigshafen (DE)

(74) Vertreter: Jacobi, Markus Alexander
Isenbruck Bösl Hörschler LLP
Eastsite One
Seckenheimer Landstrasse 4
68163 Mannheim (DE)

(56) Entgegenhaltungen:
WO-A1-2005/075560    WO-A1-2007/036495

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft thermoplastische Formmassen, enthaltend eine Mischung aus

(a) 10 bis 50 Gew.-%, bezogen auf die Summe der Komponenten (A), (B) und (C), eines Methylmethacrylat-Polymerisates als Komponente (A), erhältlich durch Polymerisation einer Mischung, bestehend aus

(a1) 90 bis 100 Gew.-%, bezogen auf (A), Methylmethacrylat als Komponente (A1) und

(a2) 0 bis 10 Gew.-%, bezogen auf (A), eines $C_1$-$C_8$-Alkylesters der Acrylsäure als Komponente (A2) und

(b) 20 bis 60 Gew.-%, bezogen auf die Summe der Komponenten (A), (B) und (C), eines Copolymerisates als Komponente (B), erhältlich durch Polymerisation einer Mischung, bestehend aus

(b1) 70 bis 90 Gew.-%, bezogen auf (B), eines vinylaromatischen Monomeren als Komponente (B1) und

(b2) 10 bis 30 Gew.-%, bezogen auf (B), eines Vinylcyanids als Komponente (B2) und

(c) 20 bis 70 Gew.-%, bezogen auf die Summe der Komponenten (A), (B) und (C), eines Pfropfcopolymerisates als Komponente (C), erhältlich aus

(c1) 50 bis 70 Gew.-%, bezogen auf (C), eines Kerns als Komponente (C1), erhältlich durch Polymerisation eines Monomerengemisches bestehend aus

(c11) 65 bis 89,9 Gew.-%, bezogen auf (C1), eines 1,3-Diens als Komponente (C11), und

(c12) 10 bis 34,9 Gew.-% bezogen auf (C1), eines vinylaromatischen Monomeren als Komponente (C12), und

(c13) 0,1 bis 5 Gew.-%, bezogen auf (C1), eines Agglomerationspolymerisates als Komponente (C13), und

(c2) 15 bis 25 Gew.-%, bezogen auf (C), einer ersten Pfropfhülle als Komponente (C2), erhältlich durch Polymerisation eines Monomerengemisches, bestehend aus

(c21) 30 bis 49,9 Gew.-%, bezogen auf (C2), eines vinylaromatischen Monomeren als Komponente (C21), und

(c22) 50 bis 69,9 Gew.-%, bezogen auf (C2), eines $C_1$-$C_8$-Alkylesters der Methacrylsäure und/oder eines $C_1$-$C_8$-Alkylesters der Acrylsäure als Komponente (C22), und

(c23) 0,1 bis 3 Gew.-%, bezogen auf (C2), eines vernetzenden Monomeren als Komponente (C23), und

(c3) 15 bis 25 Gew.-%, bezogen auf (C), einer zweiten Pfropfhülle als Komponente (C3), erhältlich durch Polymerisation eines Monomerengemisches, bestehend aus

(c31) 20 bis 80 Gew.-%, bezogen auf (C3), eines $C_1$-$C_8$-Alkylesters der Methacrylsäure als Komponente (C31) und

(c32) 20 bis 80 Gew.-%, bezogen auf (C3), eines weiteren Monomeren als Komponente (C32), und

(d) gegebenenfalls üblichen Zusatzstoffen als Komponente (D) in Mengen von bis zu 20 Gew.-%, bezogen auf die Summe der Komponenten (A), (B) und (C).

Weiterhin betrifft die vorliegende Erfindung Verfahren zur Herstellung der erfindungsgemäßen thermoplastischen Formmassen, deren Verwendung und die daraus erhältlichen Formkörper.

Aus WO 97/08241 sind Formmassen bekannt, die aus einem harten Methylmethacrylat-Polymerisat, einem harten Vinylaromat-Vinylcyanid-Polymerisat und einem weichen Pfropfcopolymerisat umfassend einen kautschukelastischen Pfropfkern, eine erste Pfropfhülle aus einem Vinylaromat-Alkylmethacrylat-Polymerisat und eine zweite Pfropfhülle aus einem Al-kyl(meth)acrylat-Polymerisat, aufgebaut sind. Diese Formmassen zeichnen sich durch gute Schlagzähigkeit, hohe Fließfähigkeit, hohe Lichttransmission, geringen Streulichtanteil und geringen Kantengelbstich aus.

Zur Verbesserung der mechanischen Eigenschaften thermoplastischer Formmassen ist der Einsatz von kautschukelastischen Pfropfcopolymerisaten bekannt, bei denen der Pfropfkern aus vergleichsweise großen agglomerisierten Teilchen besteht, die während der Herstellung der Pfropfkerne durch Zugabe eines Agglomerisationspolymerisats erhältlich sind. Solche Formmassen auf Basis unterschiedlichster Kunststoffmatrices sowie deren Herstellverfahren sind beispielsweise beschrieben in WO 01/83574 und WO 02/10222. Üblicherweise weisen solche thermoplastischen Formmassen enthaltend Pfropfkerne aus vergleichsweise großen agglomerierten Teilchen aber verschlechterte optische Eigenschaften auf.

In den WO 2005/075560 und WO 2007/036495 werden thermoplastische Formmassen auf Basis harter Methylmethacrylat-Polymerisate, harter Vinylaromat-Vinylcyanid-Polymerisate und weicher Pfropfcopolymerisate offenbart, die weiter verbesserte mechanische und/oder optische Eigenschaften aufweisen. Diese Pfropfcopolymerisate umfassen einen Kern und eine erste und eine zweite Pfropfhülle, wobei im Fall der WO 2005/075560 der Kern durch eine spezielle Teilchengrößenverteilung und Zusammensetzung gekennzeichnet ist; in der WO 2007/036495 werden eine spezielle Teilchengrößenverteilung des Kerns sowie eine spezielle Differenz zwischen den Brechungsindizes des Pfropfcopolymerisats und der Matrix als wesentlich beschrieben.

In der WO 2005/059029 werden thermoplastische Formmassen auf Basis harter Methylmethacrylat-Polymerisate, harter Vinylaromat-Vinylcyanid-Polymerisate und weicher Pfropfcopolymerisate beschrieben, die bei vergleichbaren mechanischen, rheologischen und optischen Eigenschaften eine verbesserte Chemikalienbeständigkeit, beispielsweise Lösungsmittelbeständigkeit oder Wasseraufnahme, aufweisen. Diese Pfropfcopolymerisate umfassen einen Kern und eine erste und eine zweite Pfropfhülle, wobei sich die erste Pfropfhülle durch einen relativ niedrigen Vinylaromatgehalt und einen relativ hohen Gehalt an $C_1$-$C_8$-Alkylestern der Methacrylsäure auszeichnet.

Oftmals tritt aber bei bestimmten Anwendungen, insbesondere bei Feuchtigkeitseinwirkung über längere Zeit, eine Verschlechterung der optischen Eigenschaften, insbesondere eine Zunahme der Trübung und/oder eine Zunahme visuell erkennbarer Defekte, sogenannte "Stippen", auf.

Der vorliegenden Erfindung lag daher die Aufgabe zugrunde, thermoplastische Formmassen auf Basis harter Methylmethacrylat-Polymerisate, harter Vinylaromat-Vinylcyanid-Polymerisate und weicher Pfropfcopolymerisate zur Verfügung zu stellen, die neben guten mechanischen Eigenschaften auch eine, insbesondere unter Feuchtigkeitseinwirkung, verbesserte Langzeitstabilität hinsichtlich ihrer optische Eigenschaften aufweisen, insbesondere eine verringerte Zunahme der Trübung und/oder eine verringerte Zunahme visuell erkennbarer Defekte. Eine weitere Aufgabe war, thermoplastische Formmassen dieser Art bereit zu stellen, deren mechanische und/oder optische Eigenschaften möglichst wenig durch die Verfahrensbedingungen bei der Formkörperherstellung, beispielsweise der Spritzgießtemperatur beim Herstellen spritzgegossener Formkörper, beeinflußt werden.

Demgemäss wurden die eingangs definierten thermoplastischen Formmassen gefunden, wobei erfindungswesentlich ist, dass

- Komponente (C32) ein vinylaromatisches Monomer ist und
- das Pfropfcopolymerisat (C) durch Emulsionspolymerisation hergestellt und durch Scherfällung aus der Reaktionsmischung isoliert wird.

Des weiteren wurden Verfahren zu deren Herstellung, ihre Verwendung zur Herstellung von Formkörpern sowie Formkörper, enthaltend die erfindungsgemäßen thermoplastischen Formmassen, gefunden.

Die erfindungsgemäßen thermoplastischen Formmassen auf Basis harter Methylmethacrylat-Polymerisate, harter Vinylaromat-Vinylcyanid-Polymerisate und weicher Pfropfcopolymerisate weisen neben guten mechanischen Eigenschaften auch eine, insbesondere unter Feuchtigkeitseinwirkung, verbesserte Langzeitstabilität hinsichtlich ihrer optische Eigenschaften auf, insbesondere eine verringerte Zunahme der Trübung und/oder eine verringerte Zunahme visuell erkennbarer Defekte.

Insbesondere unter Verwendung von Allylmethacrylat als Komponente (C23) werden erfindungsgemäße thermoplastische Formmassen erhalten, deren mechanische und/oder optische Eigenschaften möglichst wenig durch die Verfahrensbedingungen bei der Formkörperherstellung, beispielsweise der Spritzgießtemperatur beim Herstellen spritzgegossener Formkörper, beeinflußt werden.

Die erfindungsgemäßen thermoplastischen Formmassen, Verfahren, Verwendungen und Formkörper werden im folgenden beschrieben.

Die erfindungsgemäßen thermoplastischen Formmassen enthalten eine Mischung aus

(a) 10 bis 50 Gew.-%, vorzugsweise von 20 bis 40 Gew.-%, bezogen auf die Summe der Komponenten (A), (B) und (C), eines Methylmethacrylat-Polymerisates als Komponente (A), erhältlich durch Polymerisation einer Mischung, bestehend aus

(a1) 90 bis 100 Gew.-%, vorzugsweise von 92 bis 98 Gew.-%, bezogen auf (A), Methylmethacrylat als Komponente (A1) und

(a2) 0 bis 10 Gew.-%, vorzugsweise von 2 bis 8 Gew.-%, bezogen auf (A), eines $C_1$-$C_8$-Alkylesters der Acrylsäure als Komponente (A2) und

(b) 20 bis 60 Gew.-%, vorzugsweise von 25 bis 50 Gew.-%, bezogen auf die Summe der Komponenten (A), (B) und (C), eines Copolymerisates als Komponente (B), erhältlich durch Polymerisation einer Mischung, bestehend aus

(b1) 70 bis 90 Gew.-%, vorzugsweise von 75 bis 85 Gew.-%, bezogen auf (B), eines vinylaromatischen Monomeren als Komponente (B1) und

(b2) 10 bis 30 Gew.-%, vorzugsweise von 15 bis 25 Gew.-%, bezogen auf (B), eines Vinylcyanids als Komponente (B2) und

(c) 20 bis 70 Gew.-%, vorzugsweise von 25 bis 55 Gew.-%, bezogen auf die Summe der Komponenten (A), (B) und (C), eines durch Emulsionspolymerisation hergestellten und durch Scherfällung aus der Reaktionsmischung isolierten Pfropfcopolymerisates als Komponente (C), erhältlich aus

(c1) 50 bis 70 Gew.-%, vorzugsweise von 55 bis 64 Gew.-%, bezogen auf (C), eines Kerns als Komponente (C1), erhältlich durch Polymerisation eines Monomerengemisches bestehend aus

(c11) 65 bis 89,9 Gew.-%, vorzugsweise von 69 bis 84 Gew.-%, bezogen auf (C1), eines 1,3-Diens als Komponente (C11), und

(c12) 10 bis 34,9 Gew.-%, vorzugsweise von 15 bis 30 Gew.-%, bezogen auf (C1), eines vinylaromatischen Monomeren als Komponente (C12), und

(c13) 0,1 bis 5 Gew.-%, vorzugsweise von 0,5 bis 4 Gew.-%, bezogen auf (C1), eines Agglomerationspolymerisates als Komponente (C13), und

(c2) 15 bis 25 Gew.-%, vorzugsweise von 18 bis 22 Gew.-%, bezogen auf (C), einer ersten Pfropfhülle als Komponente (C2), erhältlich durch Polymerisation eines Monomerengemisches, bestehend aus

(c21) 30 bis 49,9 Gew.-%, vorzugsweise von 33 bis 44,5 Gew.-%, bezogen auf (C2), eines vinylaromatischen Monomeren als Komponente (C21), und

(c22) 50 bis 69,9 Gew.-%, vorzugsweise von 55 bis 66,5 Gew.-%, bezogen auf (C2), eines $C_1$-$C_8$-Alkylesters der Methacrylsäure und/oder eines $C_1$-$C_8$-Alkylesters der Acrylsäure als Komponente (C22), und

(c23) 0,1 bis 3 Gew.-%, vorzugsweise von 0,5 bis 2 Gew.-%, bezogen auf (C2), eines vernetzenden Monomeren als Komponente (C23), und

(c3) 15 bis 25 Gew.-%, vorzugsweise von 18 bis 22 Gew.-%, bezogen auf (C), einer zweiten Pfropfhülle als Komponente (C3), erhältlich durch Polymerisation eines Monomerengemisches, bestehend aus

(c31) 20 bis 80 Gew.-%, vorzugsweise von 35 bis 65 Gew.-%, bezogen auf (C3), eines $C_1$-$C_8$-Alkylesters der Methacrylsäure als Komponente (C31) und

(c32) 20 bis 80 Gew.-%, vorzugsweise von 35 bis 65 Gew.-%, bezogen auf (C3), eines vinylaromatischen Monomeren als Komponente (C32), und

(d) gegebenenfalls üblichen Zusatzstoffen als Komponente (D) in Mengen von bis zu 20 Gew.-%, vorzugsweise von 0 bis 15 Gew.-%, bezogen auf die Summe der Komponenten (A), (B) und (C),

Die in den erfindungsgemäßen thermoplastischen Formmassen verwendeten Methylmethacrylat-Polymerisate (Komponente (A)) sind entweder Homopolymerisate aus Methylmethacrylat (MMA) oder Copolymerisate aus MMA mit bis zu 10 Gew.-%, bezogen auf (A), eines $C_1$-$C_8$-Alkylesters der Acrylsäure.

Als $C_1$-$C_8$-Alkylester der Acrylsäure (Komponente (A2)) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, Ethylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich. Bevorzugt setzt man Methylmethacrylat-Polymerisate ein, deren Gewichtsmittelwerte $M_w$ der Molmassen im Bereich von 60.000 bis 300.000 g/mol liegen (bestimmt durch Lichtstreuung in Chloroform).

Die Komponente (B) ist ein Copolymerisat aus einem vinylaromatischen Monomeren (Komponente (B1)) und Vinylcyanid (Komponente (B2)).

Als vinylaromatische Monomere (Komponente B1) kann man Styrol, ein- bis dreifach mit $C_1$-$C_8$-Alkylresten substituiertes Styrol wie p-Methylstyrol oder tert.-Butylstyrol sowie $\alpha$-Methylstyrol, bevorzugt Styrol, $\alpha$-Methylstyrol oder ein Gemisch dieser Monomere, insbesondere bevorzugt Styrol, einsetzen.

Als Vinylcyanid (Komponente B2) kann man Acrylnitril und/oder Methacrylnitril, bevorzugt Acrylnitril, einsetzen.

Außerhalb des oben angegebenen Bereiches der Zusammensetzung der Komponente (B) erhält man üblicherweise bei Verarbeitungstemperaturen über 240°C Formmassen, die Eintrübungen aufweisen.

Die Copolymerisate (B) können nach bekannten Verfahren hergestellt werden, wie durch Substanz-, Lösung-, Suspensions- oder Emulsions-Polymerisation, bevorzugt durch Lösungspolymerisation (siehe GB-A 14 72 195). Bevorzugt sind dabei Copolymerisate (B) mit Molmassen $M_w$ von 60.000 bis 300.000 g/mol, bestimmt durch Lichtstreuung in Dimethylformamid.

Die Mischung der Komponenten (A) und (B), die die harte Matrix der thermoplastischen Formmassen bildet, kann beispielsweise in Form einer physikalischen Mischung der Einzelkomponenten (A) und (B), einem sogenannten Blend, vorliegen.

Die Mischung der Komponenten (A) und (B) in den thermoplastischen Formmassen kann aber auch in Form eines Copolymeren (AB) eingesetzt werden, wobei das Copolymer (AB) alle Komponenten (A1), (B1), (B2) und ggf. (A2) als Monomerbausteine enthält.

Selbstverständlich können aber auch Mischungen enthaltend die Komponenten (A), (B) und Copolymere (AB) eingesetzt werden.

In dieser Ausführungsform der Erfindung, in der die Mischung der Komponenten (A) und (B) in Form eines Copolymeren (AB) eingesetzt wird, umfassen die thermoplastischen Formmassen

(ab) 30 bis 80 Gew.-%, vorzugsweise von 45 bis 75 Gew.-%, bezogen auf die Summe der Komponenten (AB) und (C), eines Copolymeren als Komponente (AB), erhältlich durch Polymerisation einer Mischung, bestehend aus

(ab1) 30 bis 50 Gew.-%, vorzugsweise von 35 bis 45 Gew.-%, bezogen auf (AB), der Komponente (A1), und

(ab2) 0 bis 10 Gew.-%, vorzugsweise von 0 bis 5 Gew.-%, bezogen auf (AB), der Komponente (A2), und

(ab3) 40 bis 65 Gew.-%, vorzugsweise von 45 bis 55 Gew.-%, bezogen auf (AB), der Komponente (B1) und

(ab4) 5 bis 20 Gew.-%, vorzugsweise von 7 bis 14 Gew.-%, bezogen auf (AB), der Komponente (B2), und

(c) 20 bis 70 Gew.-%, vorzugsweise von 25 bis 55 Gew.-%, bezogen auf die Summe der Komponenten (AB) und (C), der Komponente (C), und

(d) gegebenenfalls Komponente (D) in Mengen von bis zu 20 Gew.-%, vorzugsweise von 0 bis 15 Gew.-%, bezogen auf die Summe der Komponenten (AB) und (C).

Verfahren zur Herstellung der Komponente (AB) sind dem Fachmann bekannt und in der Literatur beschrieben, beispielsweise in EP 1 548 061 A1.

Als Komponente (C) wird ein Pfropfcopolymerisat verwendet, aus einem Kern (C1) und zweier darauf aufgebrachter Pfropfhüllen (C2) und (C3).

Der Kern (C1) stellt die Pfropfgrundlage dar und weist einen Quellungsindex QI von 15 bis 60, insbesondere von 20 bis 50 auf, bestimmt durch Quellungsmessung in Toluol bei Raumtemperatur.

Als 1,3-Dien (Komponente (C11)) des Kerns des Pfropfcopolymerisats (Komponente C1) kann man Butadien und/oder Isopren, bevorzugt 1,3-Butadien, einsetzen.

Als vinylaromatische Monomere (Komponente (C12)) kann man Styrol, ein- bis dreifach mit $C_1$-$C_8$-Alkylresten

substituiertes Styrol wie p-Methylstyrol oder tert.-Butylstyrol sowie $\alpha$-Methylstyrol, bevorzugt Styrol, $\alpha$-Methylstyrol oder ein Gemisch dieser Monomere, insbesondere bevorzugt Styrol, einsetzen.

Als Agglomerisationspolymerisat (Komponente (C13)) können dem Fachmann bekannte und beispielsweise in WO 01/83574, WO 02/10222 oder DE-A 24 27 960 beschriebene Stoffe eingesetzt werden. Als Agglomerationspolymerisate geeignet sind beispielsweise Acrylesterpolymerisate, bevorzugt Copolymerisate aus Ethylacrylat und Methacrylamid, in denen der Anteil an Ethylacrylat 80 bis 99,9 Gew.-% und der Anteil an Methacrylamid 0,1 bis 20 Gew.-% beträgt (wobei diese Gew.-% jeweils bezogen sind auf das Gesamtgewicht des Copolymerisats), und wobei diese Acrylesterpolymerisate vorzugsweise in Form einer wäßrigen Dispersionen eingesetzt werden; die Konzentration der Acrylesterpolymerisate in einer solchen Dispersion beträgt vorzugsweise 3 bis 40 Gew.-%, besonders bevorzugt 5 bis 20 Gew.-%, bezogen auf das Gesamtgewicht der Dispersion.

Die Herstellung des Kerns (C1) erfolgt in zwei Stufen nach dem Fachmann bekannten und beispielsweise in WO 01/83574 beschriebenen Verfahren. Üblicherweise stellt man in der ersten Stufe aus den Komponenten (C11) und (C12) nach dem Fachmann bekannten Verfahren der Emulsionspolymerisation (siehe beispielsweise Encyclopedia of Polymer Science and Engineering, Vol. 1, S. 401 ff) einen Kern her, der bevorzugt eine Glasübergangstemperatur von kleiner als 0°C aufweist, und dessen mittlere Teilchengröße $D_{50}$ (bestimmt nach der im folgenden beschriebenen Methode) in der Regel im Bereich von 30 bis 240 nm, bevorzugt im Bereich von 50 bis 180 nm, liegt. In einer zweiten Stufe erfolgt nach dem Fachmann bekannten und beispielsweise in WO 01/83574 beschriebenen Verfahren die Umsetzung des in der ersten Stufe erhaltenen Kerns mit dem Agglomerationspolymerisat (C13), wonach der Kern (C1) erhalten wird, der neben agglomerierten Kernen mit entsprechend größeren Teilchengrößen in der Regel auch noch nicht-agglomerierte Kerne der vorstehend genannten Teilchengrößen umfaßt. In bevorzugten Ausführungsformen weist der Kern (C1) beispielsweise in WO 01/83574 beschriebene bimodale oder polymodale Teilchengrößenverteilungen auf, besonders bevorzugt ist eine bimodale Teilchengrößenverteilung. Der Kern (C1) weist unbeachtlich der Art der Teilchengrößenverteilung und gemittelt über alle Teilchen in der Regel eine mittlere Teilchengröße $D_{50}$ (bestimmt nach der im folgenden beschriebenen Methode) im Bereich von 100 nm bis 600 nm auf. Auf den Kern (C1) wird die Pfropfhülle (C2) aufgebracht, welche die Monomere (C21), (C22) und (C23) enthält.

Als vinylaromatische Monomere (Komponente C21) kann man Styrol, ein- bis dreifach mit $C_1$-$C_8$-Alkylresten substituiertes Styrol wie p-Methylstyrol oder tert.-Butylstyrol sowie $\alpha$-Methylstyrol, bevorzugt Styrol, $\alpha$-Methylstyrol oder ein Gemisch dieser Monomere, insbesondere bevorzugt Styrol, einsetzen.

Als Komponente (C22) sind $C_1$-$C_8$-Alkylester der Methacrylsäure, $C_1$-$C_8$-Alkylester der Acrylsäure oder deren Mischungen einsetzbar. Geeignete $C_1$-$C_8$-Alkylester der Methacrylsäure sind Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere. Geeignete $C_1$-$C_8$-Alkylester der Acrylsäure sind die bereits als Komponente (A2) beschriebenen Monomere. Bevorzugt als Komponente (C22) einsetzbar ist ein Gemisch aus 80 bis 98 Gew.-% Methylmethacrylat und 2 bis 20 Gew.-% n-Butylacrylat, jeweils bezogen auf das Gesamtgewicht der Komponente (C22).

Als Monomere der Komponente (C23) können übliche vernetzend wirkende Monomere eingesetzt werden, also im wesentlichen di -oder polyfunktionelle Comonomere, insbesondere Alkylenglykoldi(meth)acrylate wie Ethylen-, Propylen- und Butylenglykoldi(meth)acrylat, Allylmethacrylat, (Meth)acrylate von Glycerin, Trimethylolpropan, Pentaerythrit, Vinylbenzole wie Di -oder Trivinylbenzol oder Dihydrodicyclopentadienylacrylat in Form eines Isomerengemischs. Besonders bevorzugt wird als Komponente (C23) Allylmethacrylat eingesetzt, da bei dieser Ausführungsform der Erfindung thermoplastische Formmassen erhalten werden, deren mechanische und/oder optische Eigenschaften durch die Verfahrensbedingungen bei der Formkörperherstellung, insbesondere durch die Spritzgießtemperatur beim Herstellen spritzgegossener Formkörper, nur wenig oder gar nicht beeinflußt werden.

Auf die Pfropfhülle (C2) wiederum wird eine weitere Pfropfhülle (C3) aufgebracht, welche die Monomere (C31) und (C32) aufweist. Die Monomere (C31) sind $C_1$-$C_8$-Alkylester der Methacrylsäure, bei den Monomeren (C32) handelt es sich erfindungsgemäß um ein oder mehrere vinylaromatische Monomere.

Als $C_1$-$C_8$-Alkylester der Methacrylsäure (Monomere C31) können Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere verwendet werden.

Als vinylaromatische Monomere (Komponente (C32)) werden erfindungsgemäß Styrol, ein- bis dreifach mit $C_1$-$C_8$-Alkylresten substituiertes Styrol wie p-Methylstyrol oder tert.-Butylstyrol sowie $\alpha$-Methylstyrol, bevorzugt Styrol, $\alpha$-Methylstyrol oder ein Gemisch dieser Monomere, insbesondere bevorzugt Styrol, eingesetzt.

Die Herstellung der beiden Pfropfhüllen (C2) und (C3) erfolgt in Gegenwart des Kerns (C1) nach literaturbekannten Methoden, insbesondere durch Emulsionspolymerisation (Encyclopedia of Polymer Science and Engineering, Vol. 1, Seite 401 ff.). Durch die dabei angewandte sogenannte Saatfahrweise werden bei der Herstellung der beiden Pfropfhüllen keine neuen Teilchen gebildet. Die Emulsionspolymerisation wird üblicherweise durch Polymerisationsinitiatoren ausgelöst.

Bei der Emulsionspolymerisation können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-IIsulfat verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 1,0 Gew.-%, bezogen auf das fertige Emulsionspolymerisat.

Sowohl bei der Herstellung der Grundstufe, d.h. des Kerns (C1), als auch bei der Herstellung der beiden Pfropfstufen, d.h. der beiden Pfropfhüllen (C2) und (C3), können ferner Polymerisationsregler eingesetzt werden. Als Polymerisationsregler dienen u.a. Alkylmercaptane wie beispielsweise n- oder tert.-Dodecylmercaptan. Die Polymerisationsregler werden üblicherweise in einer Menge von 0,01 bis 2,0 Gew.-%, bezogen auf die jeweilige Stufe, eingesetzt.

Im übrigen wird das erfindungsgemäß zu verwendende Emulsionspfropfcopolymerisat so hergestellt, dass man eine wässrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95 % polymerisiert. Monomere, Vernetzer, Emulgator, Initiator und Regler können auch komplett oder teilweise als Zulauf der wäßrigen Vorlage zugeführt werden.

Gegebenenfalls nach einer Nachreaktionszeit von 15 bis 600 Minuten werden die Stufen (C2) und (C3) unter Zulauf der Monomeren in Gegenwart der bereits gebildeten Stufe (C1) durch Emulsionspolymerisation erzeugt.

Die Isolierung des durch Emulsionspolymerisation hergestellten Pfropfcopolymerisates (C) aus der erhaltenen Reaktionsmischung (oftmals als "Latex" bezeichnet) erfolgt erfindungsgemäß durch Scherfällung nach an sich bekannten Verfahren, in der Regel gefolgt von Filtration und anschließender Trocknung. Die Scherfällung, d.h. die Koagulation und Fällung des Pfropfcopolymers aus der Reaktionsmischung durch Einwirkung von mechanischen Scherkräften ist dem Fachmann bekannt und in der Literatur beschrieben, beispielsweise in WO 98/28344, WO 00/32376, WO 2006/087279. Die Isolierung des durch Emulsionspolymerisation hergestellten Pfropfcopolymerisates (C) aus der erhaltenen Reaktionsmischung kann grundsätzlich auch durch Sprühtrocknung nach an sich bekannten Verfahren erfolgen, jedoch ist die Sprühtrocknung ggü. der Scherfällung meist kostenintensiver.

Die Trocknung kann beispielsweise durch Gefrier-, Sprüh-, Wirbelschicht- und Umlufttrocknung erfolgen.

Das ausgefällte Emulsionspfropfcopolymerisat kann auch ohne Trocknung weiterverarbeitet werden.

Das Pfropfcopolymerisat (C) weist vorzugsweise einen Quellungsindex QI von 10 bis 40, insbesondere von 12 bis 35 auf. Der Quellungsindex wird dabei durch Quellungsmessung in Toluol bei Raumtemperatur bestimmt.

Die Teilchengrößenverteilung des Pfropfcopolymerisates (C) ist bevorzugt bimodal, wobei das erste Maximum der Teilchengrößenverteilung im Bereich von 80 bis 200 nm, bevorzugt im Bereich von 100 bis 160 nm, liegt und das zweite Maximum der Teilchengrößenverteilung im Bereich von 250 bis 500 nm, bevorzugt im Bereich von 300 bis 450 nm, liegt (jeweils bestimmt nach der im folgenden beschriebenen Methode).

Die erfindungsgemäßen thermoplastischen Formmassen zeichnen sich bevorzugt ferner dadurch aus, dass das Gewichtsverhältnis der ersten Pfropfhülle (C2) zur zweiten Pfropfhülle (C3) im Bereich von 1,5:1 bis 1:1,5 liegt.

Als übliche Zusatzstoffe (D) kommen alle solchen Substanzen in Betracht, die sich in den Komponenten (A), (B) und (C) bzw. (AB) und (C) gut lösen, beziehungsweise mit diesen gut mischbar sind. Geeignete Zusatzstoffe sind u.a. Farbstoffe und Farbpigmente, Stabilisatoren, Schmiermittel, Flammschutzmittel und Antistatika.

Die Herstellung der erfindungsgemäßen Formmassen aus den Komponenten (A), (B), (C) und gewünschtenfalls (D) bzw. (AB), (C) und gewünschtenfalls (D) erfolgt nach dem Fachmann bekannten Verfahren, insbesondere durch Mischen der Komponenten in der Schmelze mit dem Fachmann bekannten Vorrichtungen bei Temperaturen im Bereich von 200 bis 300°C, insbesondere bei 200 bis 280°C.

Bevorzugte Verfahren zur Herstellung der erfindungsgemäßen thermoplastischen Formmassen sind solche, bei denen

(a) 10 bis 50 Gew.-%, vorzugsweise von 20 bis 40 Gew.-%, bezogen auf die Summe der Komponenten (A), (B) und (C), eines Methylmethacrylat-Polymerisates als Komponente (A), erhältlich durch Polymerisation einer Mischung, bestehend aus

(a1) 90 bis 100 Gew.-%, vorzugsweise von 92 bis 98 Gew.-%, bezogen auf (A), Methylmethacrylat als Komponente (A1) und

(a2) 0 bis 10 Gew.-%, vorzugsweise von 2 bis 8 Gew.-%, bezogen auf (A), eines $C_1$-$C_8$-Alkylesters der Acrylsäure als Komponente (A2) und

(b) 20 bis 60 Gew.-%, vorzugsweise von 25 bis 50 Gew.-%, bezogen auf die Summe der Komponenten (A), (B) und (C), eines Copolymerisates als Komponente (B), erhältlich durch Polymerisation einer Mischung, bestehend aus

(b1) 70 bis 90 Gew.-%, vorzugsweise von 75 bis 85 Gew.-%, bezogen auf (B), eines vinylaromatischen Monomeren als Komponente (B1) und

(b2) 10 bis 30 Gew.-%, vorzugsweise von 15 bis 25 Gew.-%, bezogen auf (B), eines Vinylcyanids als Komponente (B2), und

(c) 20 bis 70 Gew.-%, vorzugsweise von 25 bis 55 Gew.-%, bezogen auf die Summe der Komponenten (A), (B) und (C), eines Pfropfcopolymerisates als Komponente (C), erhältlich aus

(c1) 50 bis 70 Gew.-%, vorzugsweise von 55 bis 64 Gew.-%, bezogen auf (C), eines Kerns als Komponente (C1), erhältlich durch Polymerisation eines Monomerengemisches bestehend aus

(c11) 65 bis 89,9 Gew.-%, vorzugsweise von 69 bis 84 Gew.-%, bezogen auf (C1), eines 1,3-Diens als Komponente (C11), und

(c12) 10 bis 34,9 Gew.-%, vorzugsweise von 15 bis 30 Gew.-%, bezogen auf (C1), eines vinylaromatischen Monomeren als Komponente (C12), und

(c13) 0,1 bis 5 Gew.-%, vorzugsweise von 0,5 bis 4 Gew.-%, bezogen auf (C1), eines Agglomerationspolymerisates als Komponente (C13), und

(c2) 15 bis 25 Gew.-%, vorzugsweise von 18 bis 22 Gew.-%, bezogen auf (C), einer ersten Pfropfhülle als Komponente (C2), erhältlich durch Polymerisation eines Monomerengemisches, bestehend aus

(c21) 30 bis 49,9 Gew.-%, vorzugsweise von 33 bis 44,5 Gew.-%, bezogen auf (C2), eines vinylaromatischen Monomeren als Komponente (C21), und

(c22) 50 bis 69,9 Gew.-%, vorzugsweise von 55 bis 66,5 Gew.-%, bezogen auf (C2), eines $C_1$-$C_8$-Alkylesters der Methacrylsäure und/oder eines $C_1$-$C_8$-Alkylesters der Acrylsäure als Komponente (C22) und

(c23) 0,1 bis 3 Gew.-%, vorzugsweise von 0,5 bis 2 Gew.-%, bezogen auf (C2), eines vernetzenden Monomeren als Komponente (C23), und

(c3) 15 bis 25 Gew.-%, vorzugsweise von 18 bis 22 Gew.-%, bezogen auf (C), einer zweiten Pfropfhülle als Komponente (C3), erhältlich durch Polymerisation eines Monomerengemisches, bestehend aus

(c31) 20 bis 80 Gew.-%, vorzugsweise von 35 bis 65 Gew.-%, bezogen auf (C3), eines $C_1$-$C_8$-Alkylesters der Methacrylsäure als Komponente (C31) und

(c32) 20 bis 80 Gew.-%, vorzugsweise von 35 bis 65 Gew.-%, bezogen auf (C3), eines weiteren Monomeren als Komponente (C32), und

(d) gegebenenfalls üblichen Zusatzstoffen als Komponente (D) in Mengen von bis zu 20 Gew.-%, vorzugsweise von 0 bis 15 Gew.-%, bezogen auf die Summe der Komponenten (A), (B) und (C), schmelzevermischt werden, wobei erfindungswesentlich, dass

- als Komponente (C32) ein vinylaromatisches Monomer eingesetzt wird und
- das Pfropfcopolymerisat (C) durch Emulsionspolymerisation hergestellt und durch Scherfällung aus der Reaktionsmischung isoliert wird.

Weitere bevorzugte Verfahren zur Herstellung der erfindungsgemäßen thermoplastischen Formmassen sind solche, bei denen

(ab) 30 bis 80 Gew.-%, vorzugsweise von 45 bis 75 Gew.-%, bezogen auf die Summe der Komponenten (AB) und (C), eines Copolymeren als Komponente (AB), erhältlich durch Polymerisation einer Mischung, bestehend aus

(ab1) 30 bis 50 Gew.-%, vorzugsweise von 35 bis 45 Gew.-%, bezogen auf (AB), der Komponente (A1), und

(ab2) 0 bis 10 Gew.-%, vorzugsweise von 0 bis 5 Gew.-%, bezogen auf (AB), der Komponente (A2), und

(ab3) 40 bis 65 Gew.-%, vorzugsweise von 45 bis 55 Gew.-%, bezogen auf (AB), der Komponente (B1) und

(ab4) 5 bis 20 Gew.-%, vorzugsweise von 7 bis 14 Gew.-%, bezogen auf (AB), der Komponente (B2), und

(c) 20 bis 70 Gew.-%, vorzugsweise von 25 bis 55 Gew.-%, bezogen auf die Summe der Komponenten (AB) und (C), eines Pfropfcopolymerisates als Komponente (C), erhältlich aus

(c1) 50 bis 70 Gew.-%, vorzugsweise von 55 bis 64 Gew.-%, bezogen auf (C), eines Kerns als Komponente (C1), erhältlich durch Polymerisation eines Monomerengemisches bestehend aus

(c11) 65 bis 89,9 Gew.-%, vorzugsweise von 69 bis 84 Gew.-%, bezogen auf (C1), eines 1,3-Diens als Komponente (C11), und

(c12) 10 bis 34,9 Gew.-%, vorzugsweise von 15 bis 30 Gew.-%, bezogen auf (C1), eines vinylaromatischen Monomeren als Komponente (C12), und

(c13) 0,1 bis 5 Gew.-%, vorzugsweise von 0,5 bis 4 Gew.-%, bezogen auf (C1), eines Agglomerationspolymerisates als Komponente (C13), und

(c2) 15 bis 25 Gew.-%, vorzugsweise von 18 bis 22 Gew.-%, bezogen auf (C), einer ersten Pfropfhülle als Komponente (C2), erhältlich durch Polymerisation eines Monomerengemisches, bestehend aus

(c21) 30 bis 49,9 Gew.-%, vorzugsweise von 33 bis 44,5 Gew.-%, bezogen auf (C2), eines vinylaromatischen Monomeren als Komponente (C21), und

(c22) 50 bis 69,9 Gew.-%, vorzugsweise von 55 bis 66,5 Gew.-%, bezogen auf (C2), eines $C_1$-$C_8$-Alkylesters der Methacrylsäure und/oder eines $C_1$-$C_8$-Alkylesters der Acrylsäure als Komponente (C22) und

(c23) 0,1 bis 3 Gew.-%, vorzugsweise von 0,5 bis 2 Gew.-%, bezogen auf (C2), eines vernetzenden Monomeren als Komponente (C23), und

(c3) 15 bis 25 Gew.-%, vorzugsweise von 18 bis 22 Gew.-%, bezogen auf (C), einer zweiten Pfropfhülle als Komponente (C3), erhältlich durch Polymerisation eines Monomerengemisches, bestehend aus

(c31) 20 bis 80 Gew.-%, vorzugsweise von 35 bis 65 Gew.-%, bezogen auf (C3), eines $C_1$-$C_8$-Alkylesters der Methacrylsäure als Komponente (C31) und

(c32) 20 bis 80 Gew.-%, vorzugsweise von 35 bis 65 Gew.-%, bezogen auf (C3), eines weiteren Monomeren als Komponente (C32), und

(d) gegebenenfalls üblichen Zusatzstoffen als Komponente (D) in Mengen von bis zu 20 Gew.-%, vorzugsweise von 0 bis 15 Gew.-%, bezogen auf die Summe der Komponenten (AB) und (C), schmelzevermischt werden, wobei erfindungswesentlich ist, dass

- als Komponente (C32) ein vinylaromatisches Monomer eingesetzt wird und
- das Pfropfcopolymerisat (C) durch Emulsionspolymerisation hergestellt und durch Scherfällung aus der Reaktionsmischung isoliert wird.

Die erfindungsgemäßen thermoplastischen Formmassen zeichnen sich in einer bevorzugten Ausführungsform dadurch aus, daß der Brechungsindex ($n_D$-$C_2$) der ersten Pfropfhülle (C2) kleiner als der Brechungsindex ($n_D$-$C_3$) der zweiten Pfropfhülle (C3) ist. Vorzugsweise ist der Brechungsindex ($n_D$-$C_2$) der ersten Pfropfhülle (C2) wenigstens um 2 %, insbesondere um wenigstens 3 %, kleiner als der Brechungsindex ($n_D$-$C_3$) der zweiten Pfropfhülle (C3).

In einer weiteren bevorzugten Ausführungsform sind die erfindungsgemäßen thermoplastischen Formmassen dadurch charakterisiert, dass der Betrag der Differenz aus Brechungsindex ($n_D$-C) der Gesamtkomponente (C) und dem Brechungsindex ($n_D$-AB) der Gesamtmatrix der Komponenten (A) und (B) bzw. (AB) kleiner oder gleich 0,02, insbesondere kleiner oder gleich 0,015, ist.

In einer weiteren bevorzugten Ausführungsform sind die erfindungsgemäßen Formmassen darüber hinaus dadurch charakterisiert, daß der Betrag der Differenz zwischen dem Brechungsindex ($n_D$-$C_2C_3$) der Gesamtpfropfhülle des Pfropfcopolymerisats C und dem Brechungsindex ($n_D$-$C_1$) des Kerns (C1) kleiner als 0,06, insbesondere kleiner als 0,01, ganz besonders bevorzugt gleich 0,00 ist. Die Formmassen gemäß dieser Ausführungsform zeichnen sich durch eine besonders niedrige Trübung aus.

Die genannten Brechungsindices sind jeweils nach den im folgenden noch genannten Methoden (siehe Beispiele) zu bestimmen.

Aus den erfindungsgemäßen thermoplastischen Formmassen können insbesondere durch Spritzgießen oder durch Formblasen Formteile hergestellt werden. Die thermoplastischen Formmassen können aber auch verpresst, kalandriert, extrudiert oder vakuumgeformt werden.

Die erfindungsgemäßen thermoplastischen Formmassen auf Basis harter Methylmethacrylat-Polymerisate, harter Vinylaromat-Vinylcyanid-Polymerisate und weicher Pfropfcopolymerisate weisen neben guten mechanischen Eigenschaften auch eine, insbesondere unter Feuchtigkeitseinwirkung, verbesserte Langzeitstabilität hinsichtlich ihrer optische Eigenschaften auf, insbesondere eine verringerte Zunahme der Trübung und/oder eine verringerte Zunahme visuell erkennbarer Defekte.

Insbesondere unter Verwendung von Allylmethacrylat als Komponente (C23) werden erfindungsgemäße thermoplastische Formmassen erhalten, deren mechanische und/oder optische Eigenschaften möglichst wenig durch die Verfahrensbedingungen bei der Formkörperherstellung, beispielsweise der Spritzgießtemperatur beim Herstellen spritzgegossener Formkörper, beeinflußt werden.

Beispiele

In den nachfolgenden erfindungsgemäßen Beispielen und den Vergleichsbeispielen wurden jeweils thermoplastische Formmassen hergestellt und folgende Eigenschaften ermittelt:

Brechungsindex $n_D$ [dimensionslos]:

Die Brechungsindices ($n_D$-$C_1$), ($n_D$-C) und ($n_D$-AB) wurden an Folien gemessen, die aus den jeweiligen Polymerkernen (C1), Polymeren (C) oder Polymermischungen aus den Komponenten (A) und (B) bzw. (AB) in einer IWK-Presse bei 200°C und einem Druck von 3 - 5 bar 2 min vorgepresst und abschließend bei 200°C und 200 bar 3 min nachgepresst wurden. Die Messungen wurden bei 20°C mit einem Abbé-Refraktometer nach der Methode zur Messung der Brechungsindizes bei festen Körpern durchgeführt (s. Ullmanns Encyklopädie der technischen Chemie, Band 2/1, S. 486, Herausgeber E. Foerst; Urban & Schwarzenberg, München-Berlin 1961).

Der Brechungsindex ($n_D$-$C_2$) wurde inkrementell nach folgender Formel berechnet:

$$(n_D - C_2) = \sum_{i=1}^{n} [x_i^{C2} * (nD - M_i^{C2})] / \sum_{i=1}^{n} [x_i^{C2}]$$

wobei $x_i^{C2}$ die Gewichtsteile der die Pfropfhülle (C2) aufbauenden Monomerkomponente $M_i^{C2}$ sind, ($nD$-$M_i^{C2}$) das Brechungsindexinkrement der die Pfropfhülle (C2) aufbauenden Monomerkomponente $M_i^{C2}$ ist, und n die Anzahl voneinander verschiedener, die Pfropfhülle (C2) aufbauender Monomerkomponenten ist.

Der Brechungsindex ($n_D$-$C_3$) wurde inkrementell nach folgender Formel berechnet:

$$(n_D - C_3) = \sum_{i=1}^{n} [x_i^{C3} * (nD - M_i^{C3})] / \sum_{i=1}^{n} [x_i^{C3}]$$

wobei $x_i^{C3}$ die Gewichtsteile der die Pfropfhülle (C3) aufbauenden Monomerkomponente $M_i^{C3}$ sind, $(nD-M_i^{C3})$ das Brechungsindexinkrement der die Pfropfhülle (C3) aufbauenden Monomerkomponente $M_i^{C3}$ ist, und n die Anzahl voneinander verschiedener, die Pfropfhülle (C3) aufbauender Monomerkomponenten ist.

Als Brechungsindexinkremente $(nD-M_i^{C2})$ bzw. $(nD-M_i^{C3})$ der die Pfropfhüllen (C2) bzw. (C3) aufbauenden Monomerkomponenten $M_i^{C2}$ bzw. $M_i^{C3}$ wurden folgende Werte eingesetzt:

| | |
|---|---|
| Styrol: | 1,592 |
| Methylmethacrylat: | 1,492 |
| Butylacrylat: | 1,466 |
| Dihydrodicyclopentadienylacrylat: | 1,539 |
| Allylmethacrylat: | 1,510 |

Der Brechungsindex $(n_D\text{-}C_2C_3)$ der Gesamtpfropfhülle wurde nach folgender Formel berechnet:

$$(n_D\text{–}C_2C_3) = [y^{C2} * (n_D\text{-}C_2) + y^{C3} * (n_D\text{-}C_3)] / [y^{C2} + y^{C3}]$$

wobei $y^{C2}$ bzw. $y^{C3}$ die jeweiligen Gewichtsteile der die Gesamtpropfhülle aufbauenden ersten Pfropfhülle (C2) bzw. zweiten Pfropfhülle (C3) sind, und die Brechungsindices $(n_D\text{-}C_2)$ und $(n_D\text{-}C_3)$ wie oben beschrieben bestimmt wurden.

Quellungsindex QI [dimensionslos]:

Der Quellungsindex QI des Pfropfkernpolymerisats (C1) und des Pfropfcopolymerisats (C) wurde an Folien gemessen, die durch Trocknen der bei der im folgenden noch beschriebenen Herstellung der Kautschukkerne (C1) bzw. der Pfropfcopolymerisate (C) anfallenden Dispersionen bei 50°C und 700-800 mbar über Nacht erhalten wurden.

Ein Stück der jeweiligen Folien wurde mit Toluol versetzt. Nach 24 Stunden wurde dekantiert und die gequollene Folie gewogen. Die gequollene Folie wurde im Vakuum bei bis zu 120°C bis zur Gewichtskonstanz getrocknet und wiederum gewogen. Der Quellungsindex ergibt sich als Quotient aus dem Gewicht der gequollenen Folie und dem Gewicht der getrockneten Folie.

Kerbschlagzähigkeit $a_k$ [$kJ/m^2$]:

Die Kerbschlagzähigkeit $a_k$ wurde gemäß ISO 179-2/1 eA(F) bei 23°C bestimmt.

Transmission [%]:

Die Transmission wurde gemäß DIN 53236 an Platten mit einer Dicke von 2 mm bestimmt.

Haze [%]:

Als Maß für die Lichtstreuung wurde der Haze-Wert gemäß ASTM D 1003 an Probekörpern mit einer Dicke von 2 mm bestimmt.

Teilchengrößenverteilung und mittlere Teilchengröße $D_{50}$, [nm]:

Die mittlere Teilchengröße $D_{50}$ (Gewichtsmittel), die Teilchengrößenmaxima und die Teilchengrößenverteilung der Kerne (C1) und des Pfropfcopolymerisats (C) wurden mittels hydrodynamischer Chromatographie ("HdC") ermittelt. Hierzu wurde ein Gerät "Particle Size Distribution Analyzer (PSDA)" der Firma Polymer Labs verwendet. Die jeweiligen Latices wurden dabei zusammen mit einem Elutionsmittel durch eine mit einem nicht porösem Material gepackte Säule geleitet. Das Elutionsmittel enthielt Salz und nicht-ionische und anionische Tenside. Die Elutionszeit wurde mit PS-Eichlatices kalibriert. Gemessen wurde im Bereich von 15 nm bis 1200 nm (größere Teilchen wurden herausgefiltert und nicht detektiert), wobei mit der UV-Absorption bei 254 nm gewichtet wurde.

Visuell erkennbare Defekte:

Aus den Formmassen wurden Probekörper hergestellt und 16 h bei 20°C, beziehungsweise 6 h bei 70 °C in Wasser gelagert. Die Anzahl der Defekte pro $cm^2$ der Probekörper wurde anschließend visuell beurteilt und einer der Kategorien "sehr gut" (++), "gut" (+), "ausreichend" (o), "schlecht" (-) oder "sehr schlecht" (-) zugeordnet.]

Herstellung der Formmassen:

Als Komponente A wurde ein Copolymerisat aus 95,5 Gew.-% Methylmethacrylat und 4,5 Gew.-% Methylacrylat mit einer Viskositätszahl VZ von 66 ml/g eingesetzt (bestimmt als 0,5 Gew.-%-ige Lösung in Dimethylformamid bei 23°C nach DIN 53727).

Als Komponente B wurde ein Copolymerisat aus 81 Gew.-% Styrol und 19 Gew.-% Acrylnitril mit einer Viskositätszahl VZ von 62 ml/g eingesetzt (bestimmt als 0,5 Gew.-%-ige Lösung in Dimethylformamid bei 23°C nach DIN 53727).

Die Komponenten C wurden wie folgt hergestellt:

In einer ersten Stufe wurden Grundstufen für die Pfropfkerne C1 hergestellt, indem jeweils eine Lösung aus 188 Gew.-Teilen Wasser, 0,36 Gew.-Teilen Natriumbicarbonat, 0,30 Gew.-Teilen Kaliumperoxodisulfat und 0,55 Gew.-Teilen Kaliumstearat zunächst mit Stickstoff inertisiert und auf 75°C temperiert wurde. Anschließend wurden unter Rühren innerhalb von 5 h eine Mischung aus 1 Gew.-Teil tert.-Dodecylmercaptan, 73 Gew.-Teil Butadien und 27 Gew.-Teil Styrol zugegeben. Man polymerisierte bis zu einem Umsatz von mindestens 95 %.

Die so erhaltenen Grundstufen für die Pfropfkerne C1 wiesen einen mittleren Teilchendurchmesser $D_{50}$ von 127 nm, einen mittleren Teilchendurchmesser $D_{90}$ von 148 nm und einen Quellungsindex QI von 47 auf.

| Bu | Butadien | AMA | Allylmethacrylat |
|-----|-----------------|------|-------------------------------|
| S | Styrol | DCPA | Dihydrocyclopentadienylacrylat |
| MMA | Methylmethacrylat | BA | Butylacrylat |

Aggl Agglomerationspolymerisat (siehe WO 2008 020012 Beispiel 3.1a)

Die Reaktionsmischung enthaltend jeweils die in Tabelle 1 angegebenen Gew.-Teile Pfropfkerne C1 wurde vorgelegt und mit Stickstoff inertisiert. Anschließend fügte man jeweils die in Tabelle 1 angegebenen Gewichtsteile des Agglomerationspolymerisates (gerechnet als Feststoff) in Form einer 10 gew.-%-igen Dispersion in Wasser innerhalb von 15 min zu. Nach weiteren 15 Minuten fügte man jeweils 0,95 Gew.-Teile Kaliumstearat und 0,05 Gew.-Teile Kaliumperoxodisulfat in 10 Gew.-Teilen Wasser hinzu. Diese Mischung wurde jeweils bei 75°C innerhalb von 1,5 h mit den in Tabelle 1 wiedergegebenen Gew.-Teilen einer Mischung der die erste Pfropfhülle C2 aufbauenden Monomere versetzt, wobei die letztgenannte Mischung jeweils aus den in Tabelle 1 genannten Gew.-Teilen S, MMA, BA und AMA bzw. DCPA bestand. Nach Zulaufende wurde die Polymerisation zum Aufbau der ersten Pfropfhülle C2 15 min fortgesetzt.

Zu den so erhaltenen Reaktionsmischungen wurden jeweils innerhalb von 1,5 h die in Tabelle 1 wiedergegebenen Gew.-Teile einer Mischung der die zweite Pfropfhülle C3 aufbauenden Monomere zugegeben, wobei die letztgenannte Mischung jeweils aus den in Tabelle 1 genannten Gew.-Teilen MMA und S bzw. - zum Vergleich - aus MMA und BA bestand. Anschließend fügte man jeweils weitere 0,2 Gew.-Teile Kaliumperoxodisulfat in 10 Gew.-Teilen Wasser hinzu und polymerisierte 1,5 h nach.

Die so erhaltenen Pfropfcopolymerisate wurden danach entweder durch Scherfällung oder Salzfällung (zum Vergleich) isoliert und nach dem Waschen mit Wasser bei 60°C im Vakuum bis zur Gewichtskonstanz getrocknet

Für die Scherfällung wird eine Apparatur aus einem Ultra-Turrax Antrieb T50 mit angeflanschter Durchlaufkammer DK 50 der Firma Ika genutzt. Diese wird bei 10 000 U/min betrieben. Die Reaktionsmischung C wird dabei von unten in die Durchlaufkammer geführt. Die pastöse Masse wird aus der seitlichen Öffnung der Durchlaufkammer aufgefangen, mit 50 Teilen Wasser pro 50 Teile Masse aufgeschlämmt und 5 min bei 100°C erhitzt. Nach Abkühlung auf 60°C wird die Lösung filtriert und mit 50 Teilen Wasser gewaschen. Anschließend wird die so gewonnene Komponente C 60°C im Vakuum bis zur Massenkonstanz getrocknet.

Für die Salzfällung werden 50 Teile der Reaktionsmischung C zu 80 Teilen einer wässrigen Magnesiumsulfatlösung (1 Teil Magnesiumsulfat auf 100 Teile Wasser) bei 60°C gegeben. Anschließend wird die Mischung auf 100°C aufgeheizt und 5 Minuten bei dieser Temperatur gehalten. Nach Abkühlung auf 60°C wird die Lösung filtriert und mit 50 Teilen Wasser gewaschen. Anschließend wird die so gewonnene Komponente C 60°C im Vakuum bis zur Massenkonstanz getrocknet.

Aus den in Tabelle 1 angegebenen Gew.-Teilen der Komponenten A, B, C, und wurden in einer Schmelze bei Temperaturen von 250°C die in Tabelle 1 wiedergegeben erfindungsgemäßen Formmassen 1 und die zum Vergleich dienenden Formmassen V1-V3 hergestellt. Hierbei wurde das Mischungsverhältnis so gewählt, dass der der Gewichtsgemittelte Brechungsindex der Komponenten A und B demjenigen der Komponente C entspricht. Aus den Formassen wurde Probekörper im Spritzguss hergestellt, sofern nichts anderes angegeben ist betrug die Spritztemperatur 250°C.

Für eine Bewertung des Effektes der Verarbeitungstemperatur wurden zusätzlich Probekörper bei einer Schmelzetemperatur von 230°C und 270°C hergestellt.

Tabelle 1

| Formmasse | A | B | C | C1 | Zusammensetzung C1 | C2 | Zusammensetzung C2 | C3 | Zusammensetzung C3 | Fällart |
|---|---|---|---|---|---|---|---|---|---|---|
| 1 | 25.6 | 34.4 | 40 | 60 | 71.5 B - 25.6 S - 0.9 TDMK - 2.0 Aggl | 20 | 42.8 S - 48.2 MMA-8.0 BA-1.0 AMA | 20 | 50.0 S - 50.0 MMA | Scherfällung |
| V-1 | 32.7 | 28.3 | 40 | 60 | 71.5 B - 25.6 S - 0.9 TDMK - 2.0 Aggl | 20 | 42.8 S - 48.2 MMA - 8.0 BA-1.0 AMA | 20 | 85.0 MMA - 15.0 BA | Scherfällung |
| V-2 | 26.0 | 34.0 | 40 | 60 | 71.5 B - 25.6 S - 0.9 TDMK - 2.0 Aggl | 20 | 42.8S - 48.2 MMA-8.0 BA-1.0 AMA | 20 | 50.0S - 50.0 MMA | Salzfällung |
| V-3 | 33.5 | 26.5 | 40 | 60 | 71.5 B - 25.6 S - 0.9 TDMK - 2.0 Aggl | 20 | 42.8 S - 48.2 MMA - 8.0 BA - 1.0 AMA | 20 | 85.0 MMA - 15.0 BA | Salzfällung |
| V-4 | 27.0 | 33.0 | 40 | 60 | 71.1 B - 25.5 S - 0.9 TDMK - 2.5 Aggl | 20 | 36.8 S - 54.2 MMA - 8.0 BA-1.0 AMA | 20 | 50.0 S-50.0 MMA | Salzfällung |

Die mechanischen und optischen Eigenschaften der so hergestellten Proben sind in Tabelle 2 zusammengefasst.

Tabelle 2

| Formmasse | (n$_D$-C) | ak (230°C) | ak (250°C) | ak (270°C) | Haze | Visuelle Defekte |
|---|---|---|---|---|---|---|
| 1 | 1.5395 | | 18.6 | | 7.5 | ++ |
| V-1 | 1.5335 | | 18.9 | | 17.9 | + |
| V-2 | 1.5405 | 13.3 | 13.5 | 13.3 | 7.7 | - |
| V-3 | 1.5310 | 10.1 | 11.2 | 13.6 | 24.8 | - |
| V-4 | 1.5400 | 15.4 | 15.4 | 14.9 | 3.9 | - |

**Patentansprüche**

1. Thermoplastische Formmassen, enthaltend eine Mischung aus

   (a) 10 bis 50 Gew.-%, bezogen auf die Summe der Komponenten (A), (B) und (C), eines Methylmethacrylat-Polymerisates als Komponente (A), erhältlich durch Polymerisation einer Mischung, bestehend aus

      (a1) 90 bis 100 Gew.-%, bezogen auf (A), Methylmethacrylat als Komponente (A1) und
      (a2) 0 bis 10 Gew.-%, bezogen auf (A), eines C$_1$-C$_8$-Alkylesters der Acrylsäure als Komponente (A2) und

   (b) 20 bis 60 Gew.-%, bezogen auf die Summe der Komponenten (A), (B) und (C), eines Copolymerisates als Komponente (B), erhältlich durch Polymerisation einer Mischung, bestehend aus

      (b1) 70 bis 90 Gew.-%, bezogen auf (B), eines vinylaromatischen Monomeren als Komponente (B1) und
      (b2) 10 bis 30 Gew.-%, bezogen auf (B), eines Vinylcyanids als Komponente (B2) und

   (c) 20 bis 70 Gew.-%, bezogen auf die Summe der Komponenten (A), (B) und (C), eines Pfropfcopolymerisates als Komponente (C), erhältlich aus

      (c1) 50 bis 70 Gew.-%, bezogen auf (C), eines Kerns als Komponente (C1), erhältlich durch Polymerisation eines Monomerengemisches bestehend aus

         (c11) 65 bis 89,9 Gew.-%, bezogen auf (C1), eines 1,3-Diens als Komponente (C11), und
         (c12) 10 bis 34,9 Gew.-%, bezogen auf (C1), eines vinylaromatischen Monomeren als Komponente (C12), und
         (c13) 0,1 bis 5 Gew.-%, bezogen auf (C1), eines Agglomerationspolymerisates als Komponente (C13), und

      (c2) 15 bis 25 Gew.-%, bezogen auf (C), einer ersten Pfropfhülle als Komponente (C2), erhältlich durch Polymerisation eines Monomerengemisches, bestehend aus

         (c21) 30 bis 49,9 Gew.-%, bezogen auf (C2), eines vinylaromatischen Monomeren als Komponente (C21), und
         (c22) 50 bis 69,9 Gew.-%, bezogen auf (C2), eines C$_1$-C$_8$-Alkylesters der Methacrylsäure und/oder eines C$_1$-C$_8$-Alkylesters der Acrylsäure als Komponente (C22), und
         (c23) 0,1 bis 3 Gew.-%, bezogen auf (C2), eines vernetzenden Monomeren als Komponente (C23), und

      (c3) 15 bis 25 Gew.-%, bezogen auf (C), einer zweiten Pfropfhülle als Komponente (C3), erhältlich durch Polymerisation eines Monomerengemisches, bestehend aus

         (c31) 20 bis 80 Gew.-%, bezogen auf (C3), eines C$_1$-C$_8$-Alkylesters der Methacrylsäure als Komponente (C31) und
         (c32) 20 bis 80 Gew.-%, bezogen auf (C3), eines weiteren Monomeren als Komponente (C32), und

(d) gegebenenfalls üblichen Zusatzstoffen als Komponente (D) in Mengen von bis zu 20 Gew.-%, bezogen auf die Summe der Komponenten (A), (B) und (C),

**dadurch gekennzeichnet, dass**

- Komponente (C32) ein vinylaromatisches Monomer ist und
- das Pfropfcopolymerisat (C) durch Emulsionspolymerisation hergestellt und durch Scherfällung aus der Reaktionsmischung isoliert wird.

2. Thermoplastische Formmassen nach Anspruch 1, **dadurch gekennzeichnet, daß** die Teilchengrößenverteilung des Pfropfcopolymerisates (C) bimodal ist, und das erste Maximum der Teilchengrößenverteilung im Bereich von 80 bis 200 nm liegt und das zweite Maximum der Teilchengrößenverteilung im Bereich von 250 bis 500 nm liegt (bestimmt nach der in der Beschreibung genannten Methode).

3. Thermoplastische Formmassen nach einem der Ansprüche 1 bis 2, **dadurch gekennzeichnet, dass** als Komponente (C22) ein Gemisch aus 2 bis 20 Gew.-% n-Butylacrylat und 80 bis 98 Gew.-% Methylmethacrylat, jeweils bezogen auf das Gesamtgewicht der Komponente (C22), eingesetzt wird.

4. Thermoplastische Formmassen nach einem der Ansprüche 1 bis 3, **dadurch gekennzeichnet, dass** als Komponente (C23) Allylmethacrylat eingesetzt wird.

5. Thermoplastische Formmassen nach einem der Ansprüche 1 bis 4, wobei als Komponenten (B1), (C12), (C21) und/ oder (C32) Styrol, α-Methylstyrol oder ein Gemisch dieser Monomere verwendet wird.

6. Thermoplastische Formmassen nach einem der Ansprüche 1 bis 5, **dadurch gekennzeichnet, daß** als Agglomerationspolymerisat (C13) Copolymerisate aus 80 bis 99,9 Gew.-% Ethylacrylat und 0,1 bis 20 Gew.-% Methacrylamid, jeweils bezogen auf das Gesamtgewicht der Komponente (C13), eingesetzt werden.

7. Thermoplastische Formmassen nach einem der Ansprüche 1 bis 6, **dadurch gekennzeichnet, daß** die Mischung der Komponenten (A) und (B) in Form eines Copolymeren (AB) eingesetzt wird und die thermoplastischen Formmassen umfassen

(ab) 30 bis 80 Gew.-%, bezogen auf die Summe der Komponenten (AB) und (C), eines Copolymeren als Komponente (AB), erhältlich durch Polymerisation einer Mischung, bestehend aus

(ab1) 30 bis 50 Gew.-%, bezogen auf (AB), der Komponente (A1), und
(ab2) 0 bis 10 Gew.-%, bezogen auf (AB), der Komponente (A2), und
(ab3) 40 bis 65 Gew.-%, bezogen auf (AB), der Komponente (B1) und
(ab4) 5 bis 20 Gew.-%, bezogen auf (AB), der Komponente (B2), und

(c) 20 bis 70 Gew.-% der Komponente (C), bezogen auf die Summe der Komponenten (AB) und (C), und
(d) gegebenenfalls Komponente (D) in Mengen von bis zu 20 Gew.-%, bezogen auf die Summe der Komponenten (AB) und (C).

8. Verfahren zur Herstellung der thermoplastischen Formmassen gemäß einem der Ansprüche 1 bis 7, bei dem entweder

(a) 10 bis 50 Gew.-%, bezogen auf die Summe der Komponenten (A), (B) und (C), eines Methylmethacrylat-Polymerisates als Komponente (A), erhältlich durch Polymerisation einer Mischung, bestehend aus

(a1) 90 bis 100 Gew.-%, bezogen auf (A), Methylmethacrylat als Komponente (A1) und
(a2) 0 bis 10 Gew.-%, bezogen auf (A), eines $C_1$-$C_8$-Alkylesters der Acrylsäure als Komponente (A2) und

(b) 20 bis 60 Gew.-%, bezogen auf die Summe der Komponenten (A), (B) und (C), eines Copolymerisates als Komponente (B), erhältlich durch Polymerisation einer Mischung, bestehend aus

(b1) 70 bis 90 Gew.-%, bezogen auf (B), eines vinylaromatischen Monomeren als Komponente (B1) und
(b2) 10 bis 30 Gew.-%, bezogen auf (B), eines Vinylcyanids als Komponente (B2),

oder

(ab) 30 bis 80 Gew.-%, bezogen auf die Summe der Komponenten (AB) und (C), eines Copolymeren als Komponente (AB), erhältlich durch Polymerisation einer Mischung, bestehend aus

(ab1) 30 bis 50 Gew.-%, bezogen auf (AB), der Komponente (A1), und
(ab2) 0 bis 10 Gew.-%, bezogen auf (AB), der Komponente (A2), und
(ab3) 40 bis 65 Gew.-%, bezogen auf (AB), der Komponente (B1) und
(ab4) 5 bis 20 Gew.-%, bezogen auf (AB), der Komponente (B2),

mit

(c) -20 bis 70 Gew.-%, bezogen auf die Summe der Komponenten (A), (B) und (C) bzw. (AB) und (C), eines Pfropfcopolymerisates als Komponente (C), erhältlich aus

(c1) 50 bis 70 Gew.-%, bezogen auf (C), eines Kerns als Komponente (C1), erhältlich durch Polymerisation eines Monomerengemisches bestehend aus

(c11) 65 bis 89,9 Gew.-%, bezogen auf (C1), eines 1,3-Diens als Komponente (C11), und
(c12) 10 bis 34,9 Gew.-%, bezogen auf (C1), eines vinylaromatischen Monomeren als Komponente (C12), und
(c13) 0,1 bis 5 Gew.-%, bezogen auf (C1), eines Agglomerationspolymerisates als Komponente (C13), und

(c2) 15 bis 25 Gew.-%, bezogen auf (C), einer ersten Pfropfhülle als Komponente (C2), erhältlich durch Polymerisation eines Monomerengemisches, bestehend aus

(c21) 30 bis 49,9 Gew.-%, bezogen auf (C2), eines vinylaromatischen Monomeren als Komponente (C21), und
(c22) 50 bis 69,9 Gew.-%, bezogen auf (C2), eines $C_1$-$C_8$-Alkylesters der Methacrylsäure und/oder eines $C_1$-$C_8$-Alkylesters der Acrylsäure als Komponente (C22) und
(c23) 0,1 bis 3 Gew.-%, bezogen auf (C2), eines vernetzenden Monomeren als Komponente (C23), und

(c3) 15 bis 25 Gew.-%, bezogen auf (C), einer zweiten Pfropfhülle als Komponente (C3), erhältlich durch Polymerisation eines Monomerengemisches, bestehend aus

(c31) 20 bis 80 Gew.-%, bezogen auf (C3), eines $C_1$-$C_8$-Alkylesters der Methacrylsäure als Komponente (C31) und
(c32) 20 bis 80 Gew.-%, bezogen auf (C3), eines weiteren Monomeren als Komponente (C32), und

(d) gegebenenfalls üblichen Zusatzstoffen als Komponente (D) in Mengen von bis zu 20 Gew.-%, bezogen auf die Summe der Komponenten (A), (B) und (C) bzw. (AB) und (C),
schmelzevermischt werden, **dadurch gekennzeichnet, dass**

- als Komponente (C32) ein vinylaromatisches Monomer eingesetzt wird und
- das Pfropfcopolymerisat (C) durch Emulsionspolymerisation hergestellt und durch Scherfällung aus der Reaktionsmischung isoliert wird.

9. Verwendung der thermoplastischen Formmassen gemäß einem der Ansprüche 1 bis 7 zur Herstellung von Formkörpern.

10. Formkörper, enthaltend eine thermoplastische Formmasse gemäß einem der Ansprüche 1 bis 7.

**Claims**

1. A thermoplastic molding composition, comprising a mixture of

(a) from 10 to 50% by weight, based on the entirety of components (A), (B), and (C), of a methyl methacrylate polymer as component (A), obtainable via polymerization of a mixture composed of

(a1) from 90 to 100% by weight, based on (A), of methyl methacrylate as component (A1), and
(a2) from 0 to 10% by weight, based on (A), of a $C_1$-$C_8$-alkyl ester of acrylic acid as component (A2), and

(b) from 20 to 60% by weight, based on the entirety of components (A), (B), and (C), of a copolymer as component (B), obtainable via polymerization of a mixture composed of

(b1) from 70 to 90% by weight, based on (B), of a vinylaromatic monomer as component (B1), and
(b2) from 10 to 30% by weight, based on (B), of a vinyl cyanide as component (B2), and

(c) from 20 to 70% by weight, based on the entirety of components (A), (B), and (C), of a graft copolymer as component (C), obtainable from

(c1) from 50 to 70% by weight, based on (C), of a core as component (C1), obtainable via polymerization of a monomer mixture composed of

(c11) from 65 to 89.9% by weight, based on (C1), of a 1,3-diene as component (C11), and
(c12) from 10 to 34.9% by weight, based on (C1), of a vinylaromatic monomer as component (C12), and
(c13) from 0.1 to 5% by weight, based on (C1), of an agglomeration polymer as component (C13), and

(c2) from 15 to 25% by weight, based on (C), of a first graft shell as component (C2), obtainable via polymerization of a monomer mixture composed of

(c21) from 30 to 49.9% by weight, based on (C2), of a vinylaromatic monomer as component (C21), and
(c22) from 50 to 69.9% by weight, based on (C2), of a $C_1$-$C_8$-alkyl ester of methacrylic acid and/or of a $C_1$-$C_8$-alkyl ester of acrylic acid as component (C22), and
(c23) from 0.1 to 3% by weight, based on (C2), of a crosslinking monomer as component (C23), and

(c3) from 15 to 25% by weight, based on (C), of a second graft shell as component (C3), obtainable via polymerization of a monomer mixture composed of

(c31) from 20 to 80% by weight, based on (C3), of a $C_1$-$C_8$-alkyl ester of methacrylic acid as component (C31) and
(c32) from 20 to 80% by weight, based on (C3), of a further monomer as component (C32), and

(d) optionally, amounts of up to 20% by weight, based on the entirety of components (A), (B), and (C), of conventional additives as component (D),
wherein

- component (C32) is a vinylaromatic monomer and
- the graft copolymer (C) is produced via emulsion polymerization and is isolated from the reaction mixture by precipitation resulting from shear.

2. The thermoplastic molding composition according to claim 1, wherein the particle size distribution of the graft copolymer (C) is bimodal, and the first maximum of the particle size distribution lies within the range from 80 to 200 nm, and the second maximum of the particle size distribution lies within the range from 250 to 500 nm (determined by the method specified in the description).

3. The thermoplastic molding composition according to claim 1 or 2, wherein a mixture of from 2 to 20% by weight of n-butyl acrylate and from 80 to 98% by weight of methyl methacrylate, based in each case on the total weight of component (C22), is used as component (C22).

4. The thermoplastic molding composition according to any of claims 1 to 3, wherein allyl methacrylate is used as component (C23).

5. The thermoplastic molding composition according to any of claims 1 to 4, where styrene, $\alpha$-methylstyrene, or a

mixture of said monomers is used as components (B1), (C12), (C21), and/or (C32).

6. The thermoplastic molding composition according to any of claims 1 to 5, wherein copolymers of from 80 to 99.9% by weight of ethyl acrylate and from 0.1 to 20% by weight of methacrylamide, based in each case on the total weight of component (C13), are used as agglomeration polymer (C13).

7. The thermoplastic molding composition according to any of claims 1 to 6, wherein the mixture of components (A) and (B) is used in the form of a copolymer (AB) and the thermoplastic molding composition comprises

(ab) from 30 to 80% by weight, based on the entirety of components (AB) and (C), of a copolymer as component (AB), obtainable via polymerization of a mixture composed of

(ab1) from 30 to 50% by weight, based on (AB), of component (A1), and
(ab2) from 0 to 10% by weight, based on (AB), of component (A2), and
(ab3) from 40 to 65% by weight, based on (AB), of component (B1), and
(ab4) from 5 to 20% by weight, based on (AB), of component (B2), and

(c) from 20 to 70% by weight of component (C), based on the entirety of components (AB) and (C), and
(d) optionally, amounts of up to 20% by weight, based on the entirety of components (AB) and (C), of component (D).

8. A process for producing the thermoplastic molding compositions according to any of claims 1 to 7, by mixing the following in the melt:
either

(a) from 10 to 50% by weight, based on the entirety of components (A), (B), and (C), of a methyl methacrylate polymer as component (A), obtainable via polymerization of a mixture composed of

(a1) from 90 to 100% by weight, based on (A), of methyl methacrylate as component (A1), and
(a2) from 0 to 10% by weight, based on (A), of a $C_1$-$C_8$-alkyl ester of acrylic acid as component (A2), and

(b) from 20 to 60% by weight, based on the entirety of components (A), (B), and (C), of a copolymer as component (B), obtainable via polymerization of a mixture composed of

(b1) from 70 to 90% by weight, based on (B), of a vinylaromatic monomer as component (B1), and
(b2) from 10 to 30% by weight, based on (B), of a vinyl cyanide as component (B2),

or

(ab) from 30 to 80% by weight, based on the entirety of components (AB) and (C), of a copolymer as component (AB), obtainable via polymerization of a mixture composed of

(ab1) from 30 to 50% by weight, based on (AB), of component (A1), and
(ab2) from 0 to 10% by weight, based on (AB), of component (A2), and
(ab3) from 40 to 65% by weight, based on (AB), of component (B1), and
(ab4) from 5 to 20% by weight, based on (AB), of component (B2),

with

(c) from 20 to 70% by weight, based on the entirety of components (A), (B), and (C) or, respectively, (AB) and (C), of a graft copolymer as component (C), obtainable from

(c1) from 50 to 70% by weight, based on (C), of a core as component (C1), obtainable via polymerization of a monomer mixture composed of

(c11) from 65 to 89.9% by weight, based on (C1), of a 1,3-diene as component (C11), and
(c12) from 10 to 34.9% by weight, based on (C1), of a vinylaromatic monomer as component (C12), and
(c13) from 0.1 to 5% by weight, based on (C1), of an agglomeration polymer as component (C13), and

(c2) from 15 to 25% by weight, based on (C), of a first graft shell as component (C2), obtainable via polymerization of a monomer mixture composed of

(c21) from 30 to 49.9% by weight, based on (C2), of a vinylaromatic monomer as component (C21), and
(c22) from 50 to 69.9% by weight, based on (C2), of a $C_1$-$C_8$-alkyl ester of methacrylic acid and/or of a $C_1$-$C_8$-alkyl ester of acrylic acid as component (C22), and
(c23) from 0.1 to 3% by weight, based on (C2), of a crosslinking monomer as component (C23), and

(c3) from 15 to 25% by weight, based on (C), of a second graft shell as component (C3), obtainable via polymerization of a monomer mixture composed of

(c31) from 20 to 80% by weight, based on (C3), of a $C_1$-$C_8$-alkyl ester of methacrylic acid as component (C31) and
(c32) from 20 to 80% by weight, based on (C3), of a further monomer as component (C32), and

(d) optionally, amounts of up to 20% by weight, based on the entirety of components (A), (B), and (C), or, respectively, (AB) and (C), of conventional additives as component (D), which comprises

- using a vinylaromatic monomer as component (C32) and
- producing the graft copolymer (C) via emulsion polymerization and isolating it from the reaction mixture by precipitation resulting from shear.

9. The use of the thermoplastic molding compositions according to any of claims 1 to 7 for producing moldings.

10. A molding, comprising a thermoplastic molding composition according to any of claims 1 to 7.

**Revendications**

1. Matériaux de moulage thermoplastiques, contenant un mélange de

(a) 10 à 50 % en poids, par rapport à la somme des composants (A), (B) et (C), d'un polymère de méthacrylate de méthyle en tant que composant (A), pouvant être obtenu par polymérisation d'un mélange constitué par

(a1) 90 à 100 % en poids, par rapport à (A), de méthacrylate de méthyle en tant que composant (A1) et
(a2) 0 à 10 % en poids, par rapport à (A), d'un ester alkylique en $C_1$-$C_8$ de l'acide acrylique en tant que composant (A2), et

(b) 20 à 60 % en poids, par rapport à la somme des composants (A), (B) et (C), d'un copolymère en tant que composant (B), pouvant être obtenu par polymérisation d'un mélange constitué par

(b1) 70 à 90 % en poids, par rapport à (B), d'un monomère aromatique de vinyle en tant que composant (B1) et
(b2) 10 à 30 % en poids, par rapport à (B), d'un cyanure de vinyle en tant que composant (B2), et

(c) 20 à 70 % en poids, par rapport à la somme des composants (A), (B) et (C), d'un copolymère greffé en tant que composant (C), pouvant être obtenu à partir de

(c1) 50 à 70 % en poids, par rapport à (C), d'un noyau en tant que composant (C1), pouvant être obtenu par polymérisation d'un mélange de monomères constitué par

(c11) 65 à 89,9 % en poids, par rapport à (C1), d'un 1,3-diène en tant que composant (C11) et (c12) 10 à 34,9 % en poids, par rapport à (C1), d'un monomère aromatique de vinyle en tant que composant (C12) et
(c13) 0,1 à 5 % en poids, par rapport à (C1), d'un polymère d'agglomération en tant que composant (C13), et

(c2) 15 à 25 % en poids, par rapport à (C), d'une première enveloppe de greffage en tant que composant (C2), pouvant être obtenue par polymérisation d'un mélange de monomères constitué par

(c21) 30 à 49,9 % en poids, par rapport à (C2), d'un monomère aromatique de vinyle en tant que composant (C21) et

(c22) 50 à 69,9 % en poids, par rapport à (C2), d'un ester alkylique en $C_1$-$C_8$ de l'acide méthacrylique et/ou d'un ester alkylique en $C_1$-$C_8$ de l'acide acrylique en tant que composant (C22) et

(c23) 0,1 à 3 % en poids, par rapport à (C2), d'un monomère réticulant en tant que composant (C23), et

(c3) 15 à 25 % en poids, par rapport à (C), d'une seconde enveloppe de greffage en tant que composant (C3), pouvant être obtenue par polymérisation d'un mélange de monomères constitué par

(c31) 20 à 80 % en poids, par rapport à (C3), d'un ester alkylique en $C_1$-$C_8$ de l'acide méthacrylique en tant que composant (C31) et (c32) 20 à 80 % en poids, par rapport à (C3), d'un autre monomère en tant que composant (C32), et

(d) éventuellement des additifs usuels en tant que composant (D) en quantités de jusqu'à 20 % en poids, par rapport à la somme des composants (A), (B) et (C),
**caractérisé en ce que**

- le composant (C32) est un monomère aromatique de vinyle et
- le copolymère greffé (C) est fabriqué par polymérisation en émulsion et isolé du mélange réactionnel par précipitation sous cisaillement.

2. Matériaux de moulage thermoplastiques selon la revendication 1, **caractérisés en ce que** la distribution de tailles de particules du copolymère greffé (C) est bimodale, et le premier maximum de la distribution de tailles de particules se situe dans la plage allant de 80 à, 200 nm et le second maximum de la distribution de tailles de particules se situe dans la plage allant de 250 à 500 nm (déterminés par la méthode indiquée dans la description).

3. Matériaux de moulage thermoplastiques selon l'une quelconque des revendications 1 à 2, **caractérisés en ce qu'**un mélange de 2 à 20 % en poids d'acrylate de n-butyle et de 80 à 98 % en poids de méthacrylate de méthyle, à chaque fois par rapport au poids total du composant (C22), est utilisé en tant que composant (C22).

4. Matériaux de moulage thermoplastiques selon l'une quelconque des revendications 1 à 3, **caractérisés en ce que** du méthacrylate d'allyle est utilisé en tant que composant (C23).

5. Matériaux de moulage thermoplastiques selon l'une quelconque des revendications 1 à 4, **caractérisés en ce que** du styrène, de l'$\alpha$-méthylstyrène ou un mélange de ces monomères est utilisé en tant que composant (B1), (C12), (C21) et/ou (C32).

6. Matériaux de moulage thermoplastiques selon l'une quelconque des revendications 1 à 5, **caractérisés en ce que** des copolymères de 80 à 99,9 % en poids d'acrylate d'éthyle et de 0,1 à 20 % en poids de méthacrylamide, à chaque fois par rapport au poids total du composant (C13), sont utilisés en tant que polymère d'agglomération (C13).

7. Matériaux de moulage thermoplastiques selon l'une quelconque des revendications 1 à 6, **caractérisés en ce que** le mélange des composants (A) et (B) est utilisé sous la forme d'un copolymère (AB) et les matériaux de moulage thermoplastiques comprennent

(ab) 30 à 80 % en poids, par rapport à la somme des composants (AB) et (C), d'un copolymère en tant que composant (AB), pouvant être obtenu par polymérisation d'un mélange constitué par

(ab1) 30 à 50 % en poids, par rapport à (AB), du composant (A1) et
(ab2) 0 à 10 % en poids, par rapport à (AB), du composant (A2) et
(ab3) 40 à 65 % en poids, par rapport à (AB), du composant (B1) et
(ab4) 5 à 20 % en poids, par rapport à (AB), du composant (B2) et

(c) 20 à 70 % en poids du composant (C), par rapport à la somme des composants (AB) et (C), et
(d) éventuellement le composant (D) en quantités de jusqu'à 20 % en poids, par rapport à la somme des composants (AB) et (C).

8. Procédé de fabrication des matériaux de moulage thermoplastiques selon l'une quelconque des revendications 1 à 7, selon lequel
soit

(a) 10 à 50 % en poids, par rapport à la somme des composants (A), (B) et (C), d'un polymère de méthacrylate de méthyle en tant que composant (A), pouvant être obtenu par polymérisation d'un mélange constitué par

(a1) 90 à 100 % en poids, par rapport à (A), de méthacrylate de méthyle en tant que composant (A1) et
(a2) 0 à 10 % en poids, par rapport à (A), d'un ester alkylique en $C_1$-$C_8$ de l'acide acrylique en tant que composant (A2), et

(b) 20 à 60 % en poids, par rapport à la somme des composants (A), (B) et (C), d'un copolymère en tant que composant (B), pouvant être obtenu par polymérisation d'un mélange constitué par

(b1) 70 à 90 % en poids, par rapport à (B), d'un monomère aromatique de vinyle en tant que composant (B1) et
(b2) 10 à 30 % en poids, par rapport à (B), d'un cyanure de vinyle en tant que composant (B2), soit
(ab) 30 à 80 % en poids, par rapport à la somme des composants (AB) et (C), d'un copolymère en tant que composant (AB), pouvant être obtenu par polymérisation d'un mélange constitué par (ab1) 30 à 50 % en poids, par rapport à (AB), du composant (A1) et

(ab2) 0 à 10 % en poids, par rapport à (AB), du composant (A2) et
(ab3) 40 à 65 % en poids, par rapport à (AB), du composant (B1) et
(ab4) 5 à 20 % en poids, par rapport à (AB), du composant (B2),

sont mélangés à l'état fondu avec
(c) 20 à 70 % en poids, par rapport à la somme des composants (A), (B) et (C) ou (AB) et (C), d'un copolymère greffé en tant que composant (C), pouvant être obtenu à partir de

(c1) 50 à 70 % en poids, par rapport à (C), d'un noyau en tant que composant (C1), pouvant être obtenu par polymérisation d'un mélange de monomères constitué par

(c11) 65 à 89,9 % en poids, par rapport à (C1), d'un 1,3-diène en tant que composant (C11) et
(c12) 10 à 34,9 % en poids, par rapport à (C1), d'un monomère aromatique de vinyle en tant que composant (C12) et
(c13) 0,1 à 5 % en poids, par rapport à (C1), d'un polymère d'agglomération en tant que composant (C13), et

(c2) 15 à 25 % en poids, par rapport à (C), d'une première enveloppe de greffage en tant que composant (C2), pouvant être obtenue par polymérisation d'un mélange de monomères constitué par

(c21) 30 à 49,9 % en poids, par rapport à (C2), d'un monomère aromatique de vinyle en tant que composant (C21) et
(c22) 50 à 69,9 % en poids, par rapport à (C2), d'un ester alkylique en $C_1$-$C_8$ de l'acide méthacrylique et/ou d'un ester alkylique en $C_1$-$C_8$ de l'acide acrylique en tant que composant (C22) et
(c23) 0,1 à 3 % en poids, par rapport à (C2), d'un monomère réticulant en tant que composant (C23), et

(c3) 15 à 25 % en poids, par rapport à (C), d'une seconde enveloppe de greffage en tant que composant (C3), pouvant être obtenue par polymérisation d'un mélange de monomères constitué par

(c31) 20 à 80 % en poids, par rapport à (C3), d'un ester alkylique en $C_1$-$C_8$ de l'acide méthacrylique en tant que composant (C31) et
(c32) 20 à 80 % en poids, par rapport à (C3), d'un autre monomère en tant que composant (C32), et

(d) éventuellement des additifs usuels en tant que composant (D) en quantités de jusqu'à 20 % en poids, par rapport à la somme des composants (A), (B) et (C), ou (AB) et (C),
**caractérisé en ce que**

- un monomère aromatique de vinyle est utilisé en tant que composant (C32) et

- le copolymère greffé (C) est fabriqué par polymérisation en émulsion et isolé du mélange réactionnel par précipitation sous cisaillement.

9. Utilisation des matériaux de moulage thermoplastiques selon l'une quelconque des revendications 1 à 7 pour la fabrication de corps moulés.

10. Corps moulé, contenant un matériau de moulage thermoplastique selon l'une quelconque des revendications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9708241 A
- WO 0183574 A
- WO 0210222 A
- WO 2005075560 A
- WO 2007036495 A
- WO 2005059029 A
- GB 1472195 A
- EP 1548061 A1
- DE 2427960 A
- WO 9828344 A
- WO 0032376 A
- WO 2006087279 A
- WO 2008020012 A

**In der Beschreibung aufgeführte Nicht-Patentliteratur**

- Encyclopedia of Polymer Science and Engineering. vol. 1, 401 ff
- Encyclopedia of Polymer Science and Engineering. vol. 1, 401 ff
- Ullmanns Encyklopädie der technischen Chemie. 1961, vol. 2/1, 486